Europäisches Patentamt

European Patent Office

Office européen des brevets

(11) Publication number: **0 395 449**
**A2**

# EUROPEAN PATENT APPLICATION

(21) Application number: 90304654.8

(51) Int. Cl.5: **G06F 15/72**

(22) Date of filing: 27.04.90

(30) Priority: 27.04.89 US 346864

(43) Date of publication of application:
31.10.90 Bulletin 90/44

(84) Designated Contracting States:
**DE FR GB**

(71) Applicant: **DIGITAL F/X, INC.**
**755 Ravendale Drive**
**Mountain View, California 94043(US)**

(72) Inventor: **Lay, Robert**
**464 Laurel Avenue**
**San Anselmo, California 94960(US)**
Inventor: **Mayer, Steven, T.**
**27860 Black Mountain Road**
**Los Altos Hills California 94022(US)**
Inventor: **Clarke, Charles P.**
**2230 Homestead Court 310**
**Los Altos California 94022(US)**
Inventor: **Ogrinc, Michael A.**
**490 Douglass Street**
**San Francisco California 94114(US)**
Inventor: **Carson, Kenneth, M.**
**1212 Union Street**
**San Francisco California 94109(US)**

(74) Representative: **Jones, Ian**
**POLLAK MERCER & TENCH High Holborn**
**House 52-54 High Holborn**
**London WC1V 6RY(GB)**

(54) **Electronic image processing.**

(57) An electronic image processing method and apparatus for controlling the transformation sequencing and merging of digital video images and for displaying image transformation parameters applied to the video images. These displays are made simultaneously for consecutive key frame intervals that define a video image that is ultimately displayed, using a master decision list that is key frame oriented. The master decision list is an object-oriented fully hierarchical database.

FIG. 2

# ELECTRONIC IMAGE PROCESSING

This invention relates to a method of and a system for processing an electronic image.

The invention can be applied to the control of the transformation, sequencing and merging of digital video images for subsequent display and for simultaneous display of the image parameters used, and more specifically to the creation, execution and display of a list of video editing and transformation commands arranged in an object-oriented data base.

The following describes the prior art computer editing of a video tape. The editor (i.e., a computer) loads various reels of video tape onto a plurality of video tape recorders that are under search and play control of the computer. The editor searches one of the video tape reels for a desired picture sequence, where the sequence is identified by a time track on the video tape reel. Once the desired picture sequence has been found, the human operator may decide that for example, a ten-second sequence of source material from reel no. 1 is to be used, beginning at time t = 12 minutes, 10 seconds and extending to the time t = 12 minutes, 20 seconds. During this 10-second interval, the operator might also decide to make the picture smaller as time progresses, moving from 0% shrinkage (i.e., full size) at an initial time on the destination tape (say t = 14 minutes, 1 second) and changing continuously to 15% shrinkage at the final point of the sequence on the video destination tape or other image.

As part of the image transformation process, the editor must deal with multiple time references and with changes in any or all of the times or time-varying parameters to get the desired artistic effect.

Prior art editors thus require the operator to manipulate, often without any graphical assistance, most or all of the time sequences and parameter changes individually.

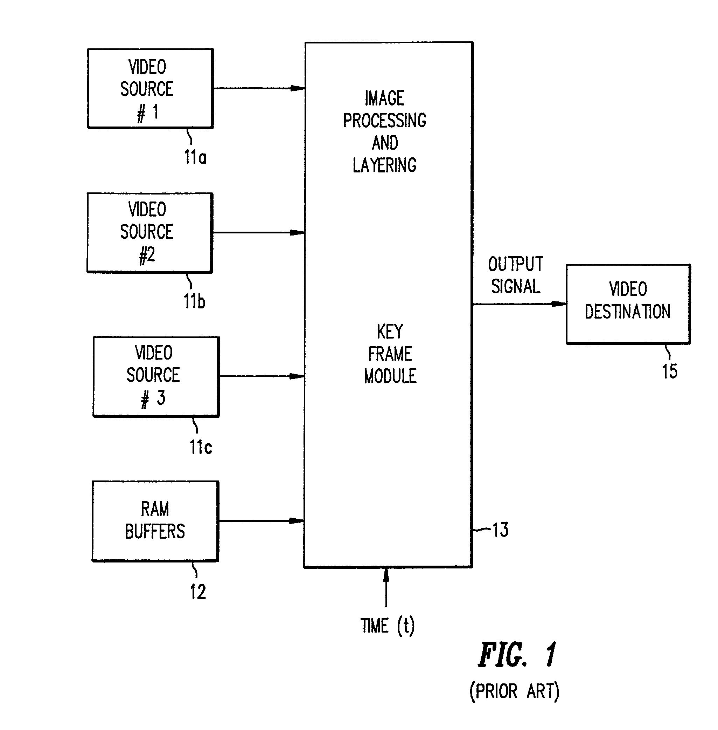

In processing of digital video images, thus it is often desirable to combine images from different "reels" or video sources together sequentially for subsequent display as a composite reel. In doing so, transforming and compositing operations such as image rotation or other image transformations are often applied to the images or to the borders of the images. These operations may vary continuously or discontinuously with elapsed time. One example from the prior art of such operations is shown schematically in Figure 1, where three video sources 11a, 11b, and 11c and one or more RAM buffers 12 provide input signals for a key frame module 13 which performs image processing and layering. The output signal of the key frame module 13 is received by a video destination module 15 for storage or display. Other input signals to key frame module 13 include the prescription (i.e., the directions) for the image transformation parameters for the variables that determine size and orientation for the video image, which prescription may vary with time t; the prescription for which video source or sources are to be used at any time to form the image; and the time variable t, which is internally or externally determined. The result of these operations in key frame module, 13 is an output signal representing the composite of the transformed video images. This output signal is sent to another reel for storage and subsequent use, or may be broadcast directly.

One deficiency therefore in the prior art of computer editing is that no graphical list of image transformations is available. Editing of the transformations is separate from the selection and control of the source(s) of video image being transformed. Without a visual image of the transformation itself, it is difficult or impossible to determine how the transformation affects the image, until the image is viewed after its transformation.

Bennet et al, in U.S. Patent No. 4,463,372, discloses a video system that allows formation of composite images and allows specification of spatial transformations such as enlargement. reduction, translation and rotation of video images, using an input key signal to define the portion of the video image to be viewed and transformed. The video viewing system operates in tandem with a video processing system, and each has its own data base.

A spatial transformation system for transforming and viewing video images is disclosed in U.S. Patent No. 4,468,688, issued to Gabriel, et al. This system allows specification of the image transformation parameters at each key frame of "knot", image parameters specified at consecutive key frames to generate video frames between two such consecutive key frames. A related video image transformation system is disclosed by Gabriel, et al. in U.S. Patent No. 4,631,750.

The prior art video processing systems are restricted to only a two level database hierarchy and so are not truly hierarchical. The prior art systems lack the capability for handling multiple databases. The prior art video processing systems also have no capability to interlock or tie together parameters of video images expressed as elements of a database.

Thus the scope and flexibility of the prior art systems is very restricted.

In accordance with the invention, multiple hierarchical databases that relate to electronic images are constructed; the elements of the databases are parameters of the video images. A keyframe database is provided for image transforms, for transition states between images, for video clips, and for still images, in the preferred embodiment. All these databases may be present in one machine.

The present invention provides in one embodiment object-oriented editing by use of key frames and use of image transformations whose parameters can be displayed graphically or numerically between successive key frames.

Each keyframe database can be interlocked with other keyframe databases. Additionally, each keyframe database is object-oriented. Thus groups of physical objects or attributes in video images can be interlocked together. A user interface that displays the various databases as a series of linked two dimensional spread sheets is preferably provided, so that the spread sheets are viewed through screen windows.

Any combination of sub-databases may be selected and combined by means of a database manager, thus providing a method of modifying the data descriptors describing the combining or modifying images and or other data. The database method of manipulating video images allows incorporation of multi media (i.e., music, stills, computer generated graphics) with conventional video images, by use of external signal processing hardware, to view, store, and edit such data. Also, the database method permits cutting and pasting of the content or the various databases into each other. In addition, by use of virtual databases (i.e., databases not necessarily corresponding to any physical reality), it is possible to construct video effects even though the user lacks the specific physical hardware (such as 3-D imaging) to do so.

In accordance with the invention, substantially all the processes involved within one video production project, such as a television commercial or television program, are maintained in one data base or in linked multiple data bases, providing a significant increase in scope and flexibility in carrying out such a project over the prior art methods.

In addition, this one data base or the linked multiple data bases can serve as a template or model or for a second related video production project, with only those desired portions or aspects of the first production being altered to produce the second production.

In accordance with the invention, electronic images can be manipulated to form a composite by making multiple passes through the same data base, where the number of operations performed on each pass is limited to the amount of physical hardware, so as to perform sequential layering of additional images or effects over previously recorded material. Any of the parameters pertaining to the images or effects can be modified, while a complete data base history is maintained for each pass. This data base history is important also to allow reconstructing of an editing session for archival, error recovery, or changes in an edit sequence required for artistic or content reasons.

The invention thus provides a system or device and a method that allows the operator to view the effects of the transformations applied to digital electronic images, as a function of time, to represent the transformations as a hierarchical data base that is object oriented and key frame oriented, and to show the transforms changing as a function of key frames.

One advantage of the representation used by the present invention is that, if the operator wishes to change the length of a time sequence, the operator merely changes the duration parameter in accordance with the present invention, as opposed to having to change a plurality of parameters as is done in the prior art. Complex image transformation procedures can also be built up easily in accordance with the present invention by using a fully hierarchical approach to manipulation and display of the control information.

Another advantage and feature of the present invention is simultaneous provision of: (1) a graphic display of a master decision list representing the multiple databases that indicates for video source material the key frame number, start time and end time or duration (i.e., a time line) for a key frame, and the choice of signals from a master reel and one or more background images within that key frame; (2) a large number of choices or options for time variation of various video image transformation parameters; and (3) graphic display of an arbitrary number of these parameters as a function of time for use by the video system operator.

In the preferred embodiment, the objects of the invention are achieved by an apparatus that includes a computer, video hardware, and software for the computer.

The invention is further described below, by way of example, with reference to the accompanying drawings, in which:

Figure 1 shows a schematic view of a prior art approach to formation of composite and transformed digital video images.

Figure 2 shows a block diagram of the hardware in accordance with the invention.

Figure 3A shows video components of a typical system in accordance with the invention.

Figures 3B, 3C, and 3D show further detail of the video components in accordance with the invention.

Figure 4 shows an overview of the software structure in accordance with the invention.

Figure 5 shows detail of the software structure in accordance with the invention.

Figure 6 shows multiple operator display windows in accordance with the invention.

Figure 7 shows a Master Decision List in accordance with the invention.

Figure 8 shlows a Graphics Decision List in accordance with the invention.

Figure 9 shows a Spline "Location" window in accordance with the invention.

Figure 10 shows a Spline Control window in accordance with the invention.

Similar reference numerals in various figures denote similar or identical structures.

The following detailed description is in several parts. Included are definitions of a number of computer/video terms encountered in the subsequent discussion and description of some aspects of the invention; an overview of the computer and video hardware and computer software in accordance with the invention; and a description of the sequence of software events and flow of information control.

Definitions and Description

Electronic Images. Electronic images include those images stored in hardware memory, presented on a monitor, or archived to storage as a sequential series of activated phosphors (or pixels) on a monitor screen. Each pixel is made up of component values that determine the color and intensity of the point. There are typically three components for describing the color and intensity of the pixel and a fourth component for describing the "transparency" of the pixel. The use of the transparency component is discussed further under compositing below.

The exact definition of these components depend on the coordinate systems (or color space) being used to describe the pixels. Typical color systems include but are not limited to the conventional RGB (red, green, blue) and YUV (a color model) color systems. The pixels are arranged into horizontal rows (scan lines). The rows are stacked on top of one another to complete the vertical dimension of the image by the display hardware.

Real-Time and Non-Real-Time. An event (typically the displaying of an image) that is generated and displayed as it happens is a real-time event. For example, the hardware and software that updates the images output to a display monitor that is refreshed or updated 60 times a second is real-time hardware and software because these actions must be completed within the time constraints of consistently finishing the display prior to the display of the next field. Real-time also refers to the operator specification of completed video sequences that are accurately specified as to their starting times, ending times and run-time length.

Events that are not generated quickly enough to meet the constraints of real-time or events that vary on playback from that specified at generation are referred to as non-real-time. Examples of non-real-time events are those operations that may happen before a real-time event is to be initiated. For example, if a data structure is to be updated to control the subsequent transformation of an image and the update is time consuming (in computer terms) the setup would be referred to a a non-real-time setup event.

Transform. New electronic images that are generated from pre-existing images are said to be transformed. Typical examples of transformed images include but are not limited to images that are made smaller, larger, and are rotated in the X, Y, and Z axes.

Transformations can be real-time or non-real-time. The transforms discussed below are typically real-time transformations.

Keying or Compositing. Electronic images that are combined on a pixel by pixel basis (see above) in real-time for display and/or storage are said to be composited or keyed together. As outlined above, the color and intensity of the picture element represented by the pixel are contained in three of the pixel components. The fourth pixel element is often referred to as the "alpha" channel and describes the relative transparency of the other three elements of the pixel when it is to be keyed or composited with a second or subsequent image.

The transparency component varies from a value of 0 to a value of 1. If the value is set equal to a one the associated pixel is totally opaque and if the value is 0 the pixel is totally transparent. When a totally opaque pixel is combined with any other pixel value (whose alpha value is 1- alpha for the first pixel by definition) only the value of the opaque pixel is visible. When a totally transparent pixel is combined with any other pixel the transparent pixel will not be seen. Pixels with alphas between 0 and 1 are mixed in proportion to their alpha values.

Clips. Sequences of video images that are sequentially associated are referred to as clips:. The term as used here refers to the combination of these sequences into a finished sequence of clips (sometimes referred to as a scene).

Keyframe(s). A keyframe is an event in time with a time value, and an associated set of parameters that completely describe that event at that instant in time. All information necessary to complete the event is associated with a keyframe. Examples of keyframes include but are not limited to transformation keyframes, compositing keyframes, and clip (or machine control) keyframes.

A transformation keyframe described how an image is to be transformed and includes the time at which the keyframe is to happen followed by associated information for controlling the transformation. This information includes, as with all keyframes, a mathematical equation, which is generally spline parameters (see below) for describing how the value changes as a function of time in the neighborhood of the point. For example, a keyframe to rotate an electronic image around the X and Y axis of a given coordinate system will include the time at which the keyframe is to be rotated and the angles of desired rotation. Certain functions may not be able to vary continuously with time and therefore must be discretely set with an absolute value.

A compositing keyframe describes how two or more images are to be combined and includes keyframe time followed by parameters that describe the transparency value of the various images being composited at the specified keyframe, the type of key to be provided, and the specifics of the logical source devices that provide the source material to be composited.

A clip or machine control keyframe describes which sequences of video tape material are to be used to be transformed and combined and contains the time at which the keyframe is to happen followed by the specifics of starting, ending video tape locations (video tape time code) and the logical machine identification parameters on which the clip is to be identified.

The keyframes outlined above are specific examples of a general keyframe structure that allows the three keyframe elements described and all of the elements to be combined so that their interaction can all be managed from a single hierarchical keyframe structure as described below.

Spline. An equation with control parameters or coefficients of usually a higher order differential equation, used for computing how an image changes from frame to frame. In accordance with the invention, splines are used to achieve keyframe editing.

Decision Lists and the Master Decision List. When like keyframes described above are combined they are referred to here as a decision list.

For example, a keyer decision list is a number of keyframes that describe a compositing event. In compositing, a typical input device used to describe the transparency of a given image is a "fader bar." The feeder bar is a device which is moved from one physical limit of travel to the other. The value of transparency at one limit of travel corresponds to a value of 1.0 for the associated image and the value of the opposite limit corresponds to a value of 0.0 for that image (as described above).

As the fader bar is moved by the operator, a number of keyframes can be generated by the operator (as will be described below) at different fader bar positions. The resultant keyframes contain the fader bar positions at these instantaneous points. To allow a smooth mathematically continuous curve to be plotted through these instantaneous events, spline data is also calculated and stored as a part of the keyframe. The example below described graphically how a number of keyframes result in a smooth continuous curve through a region of the time domain. It should be noted that the key decision list for the example contains all of the required information to generate the entire curve.

Likewise a transformation decision list is made up of a number of transformation keyframes. When these are combined sequentially they describe the subsequent transformation of an initial live and still sequence of video images to complete a desired effect.

A clip decision list is made up of a number of keyframes which, in a similar way, describe the specific parameters (time, tape identification, tape "in point," tape "out point," etc.) required to automate the construction of a finished sequence of tape clips from one or more input media to an output media. Examples of the input media include but are not limited to such devices as video tape recorders, real-time video disks, video still-stores containing previously images, and real-time generated special effects devices.

In accordance with the invention these keyframes can not only be created to link events of a like type (e.g., compositing, transformations and clips) into a decision list, but the different types of events described by these individual decision lists can be coordinated to make up a "master decision list" (MDL) that allows the total control of the environment.

For example, the master decision list (MDL) controls the loading of various live and still video sequences into various layers of compositing hardware and manages the varying levels of transparency associated with compositing. The master decision list also controls the parameters associated with the transformations on one or more of the image streams being fed into the compositing hardware, controls the input and output devices for feeding the input and recording the output of an interactive master decision list driven editing session. In accordance with the invention, the MDL can be "windowed down" to display the individual decision list of which the MDL is composed.

Data Base. The term data base denotes a preferably two dimension array of parameters maintained by the computer that contains the specific information that make up the keyframes in an individual decision list which in turn comprise the master decision list. As is known in the art of computing, a hierarchical database is a database (i.e., organized aggregate of data) in which each record type is involved in one or less relationships as a subordinate, and in which only one relationship is allowed between any two record types.

An object-oriented database is a database in which the data objects are modeled metaphorically after the physical objects they represent. In accordance with the invention, messages are sent to modify a data object. These messages modify the data descriptors describing the particular aspect of the data object, and also additional messages are generated via the data base links to all other data objects that have dependence on the particular data object and associated parameters.

YUVα. The four components of a video signal expressed on a pixel-by-pixel basis where Y is the luminance value, U and V represent color information vectors (red-luminance and blue-luminance), and α is a transparency value.

4:4:4:4. A standard convention where all four components of a video signal are digitally sampled and the picture components have full horizontal frequency response. In accordance with the invention, all internal video processing is implemented using 4:4:4:4 YUVα processing.

4:2:2. Represents a convention where the picture components are digitally sampled and the Y signal of a video picture has full horizontal resolution, the color of U and V signals have half horizontal resolution, and there is no α component information.

Description of Hardware for the Preferred Embodiment

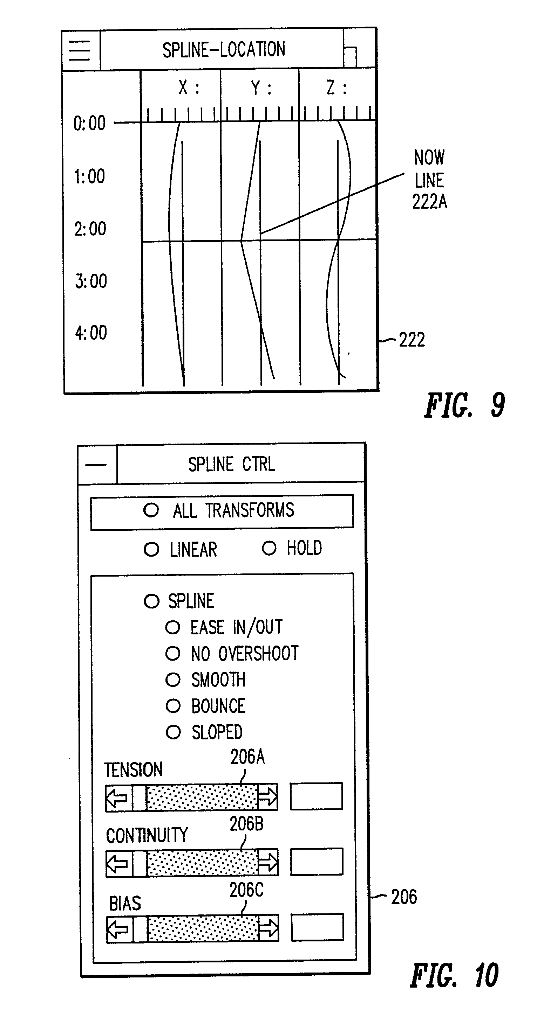

The operator control panel and the Video Processor described below are described in detail in copending Patent Application No. 07/116,801, entitled "Video Digital Analog Processing and Display," filed Oct. 30, 1987, and incorporated herein by reference. The remainder of the hardware described below is commercially available. The hardware includes the following as shown in Figure 9:

An IBM PC-AT Clone 50 (PC) preferably is an IBM PC-AT work-alike personal computer built by the Intel corporation using an Intel 30386 processor running at 16 MHZ (or faster). The computer runs under the commercially available Microsoft Disk Operating System 3.0 and the commercially available Windows manager software (not shown). The PC 50 has four megabytes of memory and is expandable to more, and a conventional serially scanned ASCII keyboard 52 and a conventional Microsoft serial mouse 54. The PC 50 includes a standard "IBM-PC style" backplane 56 supporting both 8 bit and 16 bit width PC cards. The bit width references the width of the computer data path on the backplane 56. Though the preferred embodiment is based on the above-described IBM PC clone computer, any similar high performance computer could be used. The hardware specific software code and bus interfaces would have to be changed accordingly.

The WYSE video monitor 60 is preferably a commercially available (from WYSE) high resolution black and white display video monitor with its associated video display controller card 62 The preferred embodiment is not dependent on any particular display format resolution and could support either black and white or color video displays.

The disk controller 64 is a commercially available control system for the floppy disk drive 66 and conventional SCSI hard disk drive 68.

The communications board 72 is preferably a commercially available serial communications board made by Digi-Board. The board 72 includes an Intel 80188 processor 74, program ROM and RAM 76, four or preferably eight Universal Asynchronous Receiver Transmitter channels 78 (UART's), and an interprocessor communications channel 80 (i.e., a bus interface) to the PC 50. Communications between the 80188 processor 74 and the 30386 processor in PC 60 is via a conventional mail box message passing protocol (not shown) using RAM on the communications board 72. The communications board 72 input output is a RS422 standard communications protocol 82.

The video-tape recorders 86A, 86B, ... . 86H accept the RS422 commands from the communications board 72 using a Society of Motion Picture and Television Engineers (SMPTE) standard that may be extended by the manufacturers of the individual video-tape recorders.

The communications board 72 has conventional software drivers (not shown) to interface with the video-tape recorders 86A, ... , 86H. The use of the separate 80188 processor 74 decouples the PC 50 from the real time application of controlling the multiple video-tape recorders 86A. ... , 86H, which includes the tasks of searching for a selected spot on the tape or tapes, queueing up the tape recorders, and synchronizing the playback speed and position of each of the tape recorders. Searching of the video-tapes is made possible because each of the tape-recorders preferably have a recorded address track and SMPTE time-code that represents the tape position and which is reported back to the communications board 72 via the RS422 channel 82.

The serial interface card 90 is preferably a commercially available multi-channel RS232 (or alternatively RS422) UART.

The drawing tablet 92 is a commercially available device for operator input primarily for drawing or titling of pictures. In accordance with the invention, all the operator interface devices including the keyboard, joystick, drawing tablet, trackball, etc. can be used to input parameters determined by the operator.

A bus converter 94 (i.e., a translator board referred to herein as ATI for AT-interface) converts the PC backplane 56 signals to an electrical equivalent of a conventional VME bus 94B standard. PC to VME bus converters are commercially available. The preferred embodiment is such a device extended with a paging oriented memory management system, to extend the address space of the PC 50. The video processing control registers and frame buffers (not shown) are conventionally memory mapped into the address space of the PC 50.

A control panel 98 is provided to act as a data concentrator and scanner for the numerous operator controls. Software emulation of each of the controls is available by using the conventional mouse 54 activating controls on the video monitor 60. Operator inputs include a multiple axis analog joystick 100, an optional analog slider 101 (i.e., fader bar), a keyboard matrix (i.e., a keyboard) 102 including numeric keys, general purpose soft keys, and special purpose keys, a two axis commercially available trackball assembly 104, and four General Purpose Inputs and outputs 106 (GPI'S, only one of which is shown) for connection to external switches or drivers (not shown).

A single chip controller 108 (preferably a commercially available micro-controller such as the Intel 8097 8-bit controller) scans all of the operator inputs, and reports back the data via a single RS422 or RS232 serial command line to the PC. Controller 108 is connected to slider 102 and joystick 100 by conventional analog multiplexer (MPX) 109 and conventional analog-to-digital converter 110. Scanner 112 conventionally connects keyboard matrix 102 to controller 108. Each GPI 106 is connected to controller 108 by a conventional opto-isolator 114.

The operation of the above described hardware during operator data entry and manipulation time consists of first, keystrokes by the operator at the keyboard matrix 102 being detected and converted by the controller 108 into a stream of data on RS422 line 116. Then the stream on RS422 line 116 is received via the serial interface card 90 and the data is reported to the PC 50 through a conventional Disk Operating System (DOS) serial communications call modified using standard techniques for interrupt-driven mode operation. Then the data is operated on by the PC 50 as part of the keyframe editing applications program (not shown here but described below). Operator information and feedback are displayed via DOS and Windows calls to the video monitor 60, the modified data being saved in the PC 50 memory or on the floppy 66 or hard disk 68. Then optionally, commands are issued to the Video Processor 120 via the ATI translator board 94 to the VME bus 94B.

A second mode of operation is playing back a set of operations from the stored data base. The data flow for this mode consists of first, the operator initiating the command typically from the control panel keyboard matrix 102 or the GPI interfaces 106. Then the keystroke is encoded and sent via the RS422 line 116 and the serial interface board 90 to the PC 50. The PC 50 initiates the scanning of the data base. Since the data base is organized around a time line, the PC 50 is receiving time commands through 60 Hz interrupts from the Video Processor 120 by way of the VME bus 94B, and is receiving optional timing information via one of the RS422 ports connected to the communications board 72 of UARTs 78. The PC 50 upon scanning of the data base issues commands through the PC backplane 56 and the message memory on the 80188 processor 74 to control the external video-tape recorders 86A, ... , 86H and also issues commands via the ATI interface card 94 to control the Video Processor 120.

Video Processor Hardware

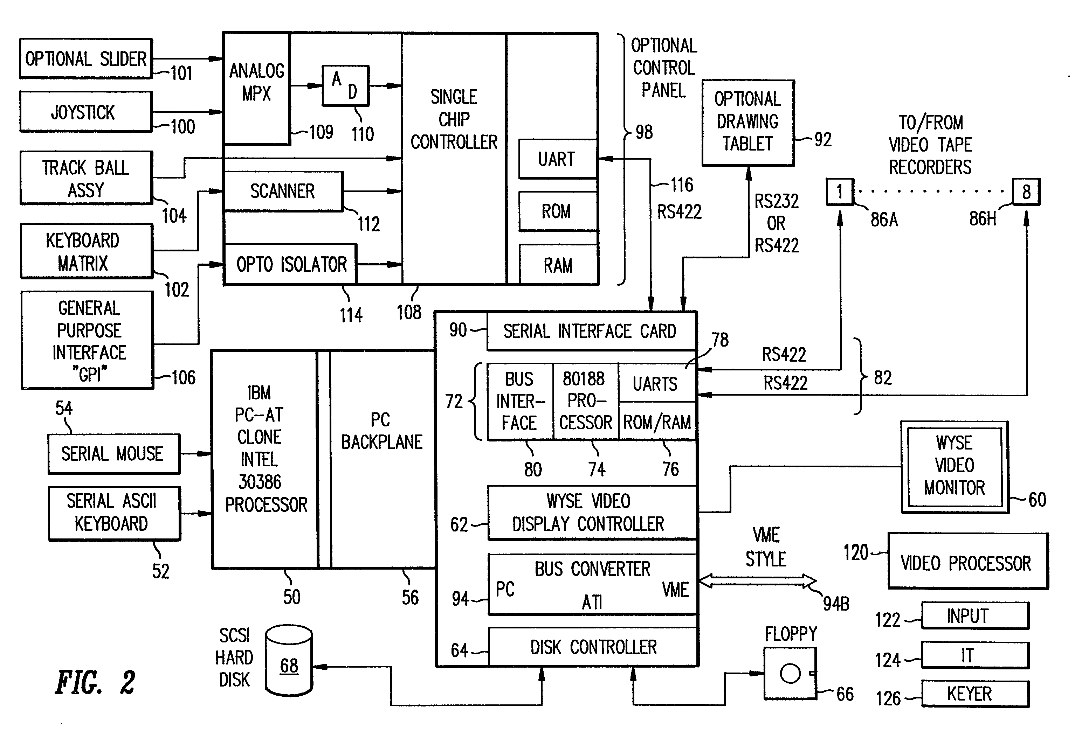

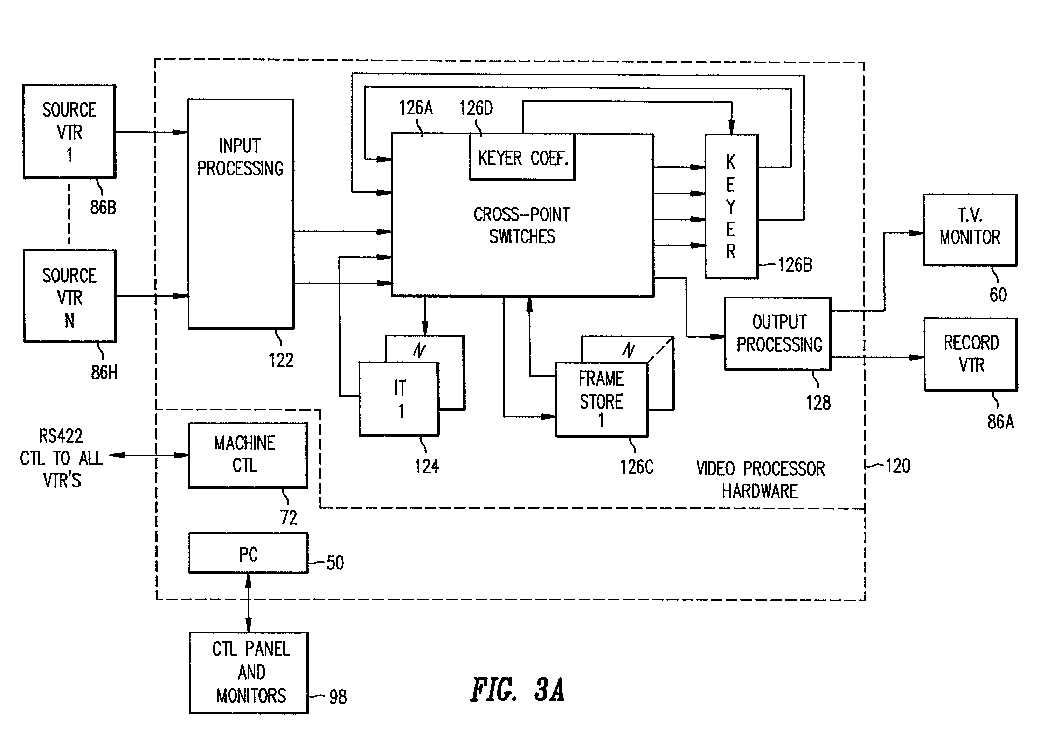

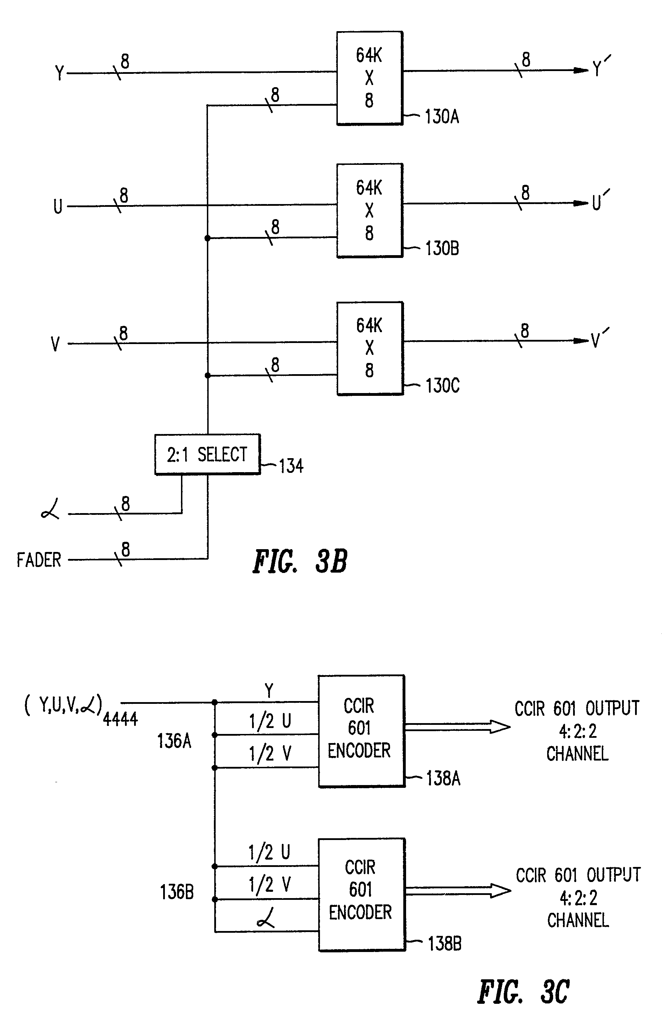

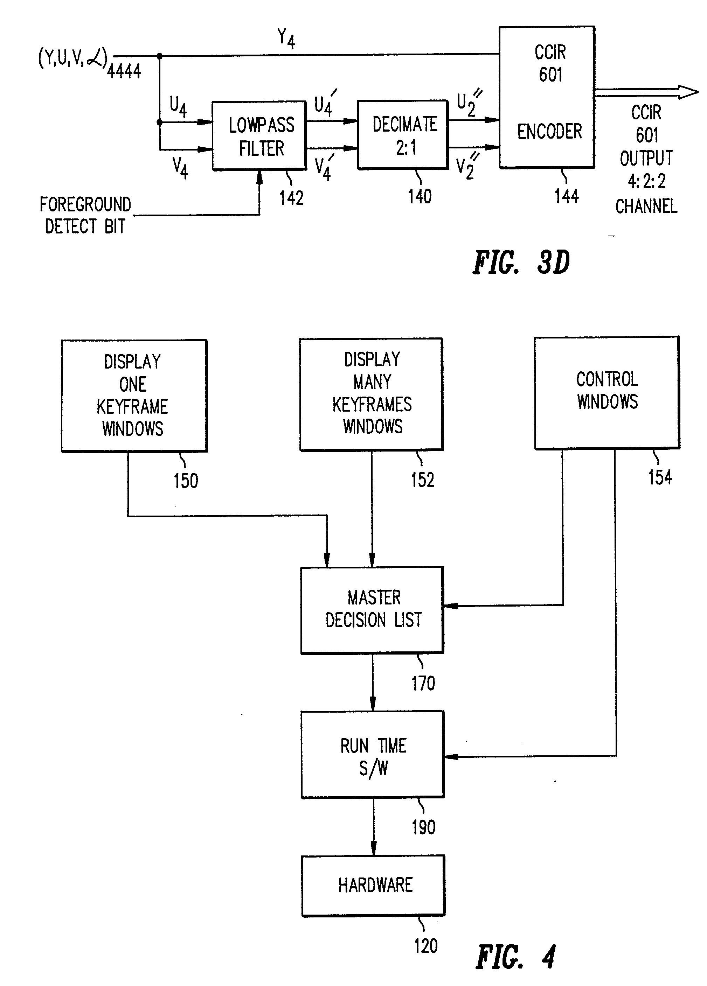

There are also preferably provided three other additional pieces of hardware (preferably part of Video Processor 120) which interface to the keyframe editing system herein described. This additional hardware is shown in Figure 2 and in more detail in Figure 3.

The Input Sub-system 122. The system described above supports video input in a number of standard analog formats (including Composite, Betacam, YUV, MII, and RGB) and the component digital standard known as CCIR 601. During operations performed by this editing system, it is often required to use video clips sorted in different video formats. The Input Sub-system 122 allows the editing system to specify the source type of any clip on a keyframe basis, and performs the necessary processing to convert the input from whatever input format it is to the internal processing standard of the hardware. This Input Sub-system 122 supports an extensible number of simultaneous live and unique analog and digital CCIR 601 standard video inputs, each of which may include video and or alpha.

The IT (Image Translator) 124. The IT 124 performs the operations described earlier as transforms. As shown, multiple IT's 124 are preferably provided. For each field interval, the editing system loads to the IT 124 a complete set of parameters which completely describe the desired transformation, i.e., the degree of rotation, size change, etc. The digital hardware of the IT 124 processes its video input as per these instructions. The operations supported include:

- Insertion of a user selectable colored border around the picture.
- Ability to freeze-frame a picture and transform the now still image.
- Filtering and Re-sampling of the image to produce a specified spatial transformation.
- Painting and titling of a freeze frame picture.

The Keyer assembly 126. The Keyer assembly 126 includes four elements: crosspoints 126A, a Keyer 126B, multiple frame stores such as 126C for images, for compositing information, and for trail and decay data, and a keyer coefficient compute block 126D.

The crosspoints 126A provide a digital video switching matrix which allows the editing system to route video inputs from the available video sources (Input Sub-system 122, IT 124 outputs, and Framestore Still Stores 126C) to the various video "sinks" (IT inputs 124, Framestore inputs 126C, System output 128, Keyer 126A Inputs). In addition, there is a special set of crosspoints for routing and selecting the alpha components which feed the keyer 126B.

The Keyer 126B preferably combines up to four layer of video at one time. The layers are combined by mix ratios or weights under control of the keyer coefficients. (These equations are derived from the known Porter layering equations.) The overall equation of the combination is:

$$out_{YUV} = in1_{YUV} \cdot C1_{YUV}$$
$$+ in2_{YUV} \cdot c2_{YUV}$$
$$+ in3_{YUV} \cdot c3_{YUV}$$
$$+ in4_{YUV} \cdot C4_{YUV}.$$

$$out_{alpha} = in1_{alpha} \cdot C1_{alpha}$$
$$+ in2_{alpha} \cdot c2_{alpha}$$
$$+ in3_{alpha} \cdot c3_{alpha}$$
$$+ in4_{alpha} \cdot C4_{alpha}.$$

where the "in's" are the video inputs selected in the crosspoints and the "c's" are the keyer coefficients produced by the keyer coefficient compute block 126D.

The inputs to the keyer coefficient compute block 126D are:

The alpha's associated with the input video.
- Keyer 1 alpha ($in1_{alpha}$)
- Keyer 2 alpha ($in2_{alpha}$)
- Keyer 3 alpha ($in2_{alpha}$)
- Keyer 4 alpha ($in2_{alpha}$)

The cpu specified fader control value for each level.
- cpu register 1 (f1)
- cpu register 2 (f2)
- cpu register 3 (f3)
- cpu register 4 (f4)

Alternately, besides or in conjunction with CPU fader information, additional information can be used to determine the mix weights. The sources of this information include frame buffers that contain protection or holdback information; the output of comparators that compare the depth information (i.e., Z) of rasters that have been manipulated in 3-D space; the alpha or other components from other pictures; the output of key processing circuitry to do industry standard chroma and luminance keys; and various industry standard decay and fade type effects. The resulting compositing operations are based on the multiplications of the appropriate YUV and alphas using the selected control parameters.

The outputs of the compute block 126D are the coefficient values for each level of key. A list of the outputs and their assigned names follows:
- coefficient for level 1 yuv. $c1_{yuv}$
- coefficient for level 1 alpha $C1_{alpha}$
- coefficient for level 2 yuv. $c2_{yuv}$
- coefficient for level 2 alpha $c2_{alpha}$
- coefficient for level 3 yuv. $c3_{yuv}$
- coefficient for level 3 alpha $C3_{alpha}$
- coefficient for level 4 yuv. $c4_{yuv}$
- coefficient for level 4 alpha $C4_{alpha}$

The equations of $c_{yuv}$ and $c_{alpha}$ differ depending on whether or not the input video is prescaled.

Assume, firstly that the incoming video is UNSCALED, i.e., in = (y1,u1,v1,alpha1).

$$c1_{yuv} = f1 \cdot k \cdot 1 \cdot in1_{alpha}$$
$$c1_{alpha} = f1 \cdot k1$$
$$c2_{yuv} = (1-f1 \cdot k1 \cdot in1_{alpha})f2 \cdot k2 \cdot in2_{alpha}$$
$$c2_{alpha} = (1-f1 \cdot k1 \cdot in1_{alpha})f2 \cdot k2$$
$$c3_{yuv} = (1-f1 \cdot k1 \cdot in1_{alpha}) \ (1-f2 \cdot k2 \cdot in2_{alpha}) \ f3 \cdot k3 \cdot in3_{alpha}$$
$$C3_{alpha} = (1-f1 \cdot k1 \cdot in1_{alpha}) \ (1-f2 \cdot k2 \cdot in2_{alpha})f3 \cdot k3$$
$$c4_{yuv} = (1-f1 \cdot k1 \cdot in1_{alpha}) \ (1-f2 \cdot k2 \cdot in2_{alpha}) \ (1-f3 \cdot k3 \cdot in3_{alpha}) \ f4 \cdot k4 \cdot in4_{alpha}$$
$$C4_{alpha} = (1-f1 \cdot k1 \cdot in1_{alpha}) \ (1-f2 \cdot k2 \cdot in2_{alpha}) \ (1-f3 \cdot k3 \cdot in3_{alpha})f4 \cdot k4$$

Now assume that the incoming video (on all levels) is PRESCALED, i.e., in1 = (y1·alpha1, u1·alpha1, v1·alpha1, alpha1):

$$c1_{yuv} = f1 \cdot k1$$
$$c1_{alpha} = f1 \cdot k1$$
$$c2_{yuv} = (1-f1 \cdot k1 \cdot in1_{alpha})f2 \cdot k2$$
$$c2_{alpha} = (1-f1 \cdot k1 \cdot in1_{alpha})f2 \cdot k2$$
$$c3_{yuv} = (1-f1 \cdot k1 \cdot in1_{alpha}) \ (1-f2 \cdot k2 \cdot in2_{alpha})f3 \cdot k3$$
$$C3_{alpha} = (1-f1 \cdot k1 \cdot in1_{alpha}) \ (1-f2 \cdot k2 \cdot in2_{alpha})f3 \cdot k3$$
$$c4_{yuv} = (1-f1 \cdot k1 \cdot in1_{alpha}) \ (1-f2 \cdot k2 \cdot in2_{alpha}) \ (1-f3 \cdot k3 \cdot in3_{alpha})f4 \cdot k4$$
$$C4_{alpha} = (1-f1 \cdot k1 \cdot in1_{alpha}) \ (1-f2 \cdot k2 \cdot in2_{alpha}) \ (1-f3 \cdot k3 \cdot in3_{alpha})f4 \cdot k4$$

The keyer coefficient compute block 126D has a control at each level to allow for either video format and adjust the equations for the yuv coefficients. In addition, multiply operations in the above equations are performed by taking the $\log_2$ of each of the numbers and adding the logarithms. The operations (1-expression) are performed by PROM based Look Up Tables (i.e., LUT's). A final $\log_2^{-1}$ LUT is used to produce the actual coefficients used by the keyer 126B.

For example, the following equation $c1_{yuv} = f1^*k1$
is actually computed as:
$c1_{yuv} = \log_2^{-1}[\log_2(f1) = \log_2(k1)]$

The data format at the output of the keyer 126B is always PRESCALED. In certain applications, a downstream video switcher may be unable to properly composite PRESCALED video. Therefore in accordance with the invention (see Figure 3B) a set of three look-up tables (LUT's) 130A, 130B, 130C are provided downstream of the keyer 126B, each LUT 130A, 130B, 130C being of size 64K bytes (i.e., 64K bits by 8 bits). LUT's 130A, 130B, 130C are used to perform the necessary division operation to convert PRESCALED video Y, U, V to UNSCALED video $Y'$, $U'$, $V'$ (i.e., to divide the Y, U and V components by the alpha component). When this division operation is not needed, the LUT's 130A, 130B, 130C are loaded to perform a master fade to black by the fader input 132, under control of 2:1 select circuit 134.

One other output of the keyer computer block 126D is a one bit flag which is set at every pixel at which a foreground element, has in whole or in part obscured a background pixel. The term foreground refers to additional visual elements to be processed onto the background, or existing, visual elements. This signal is used in the Input subsystem 122 and Output subsystem 128 (see Figure 3A) to control the conversion of the internal 4:4:4:4 format to CCIR 601 format for a selected portion of a screen raster. This bit is called the Foreground detect bit.

The CCIR 601 standard is a 4:2:2. YUV standard without alpha. The Input subsystem 122 and Output subsystem 128 allow the user two methods for output in accordance with the invention. In one method (see Figure 3C), the $(Y,U,V,\alpha)_{4444}$ signal is divided into two separate 4:2:2 streams, the first stream 136A containing all of the samples of Y, and every other of the samples of U and V, and the second stream 136B containing the remaining samples of U and V and all the samples of alpha. The first stream 136A is provided to CCIR 601 encoder 138A, and the second stream 136B is provided to similar CCIR 601 encoder 138B. Both CCIR 601 encoders 138A, 138B provide a CCIR 4:2:2 output channel.

The second output method (see Figure 3D) is to use a single CCIR 601 4:2:2 output channel. In this mode, the $\alpha$ samples are discarded from the

$(Y,U,V,\alpha)_{4444}$ input signals. The $U_4$, $V_4$ signals are provided to a low pass filter 142 to remove unwanted frequency components, which would if present result in a phenomenon called aliasing in the next processing step. In the next processing step, every other U and V sample is discarded from the filtered $U'_4$, $V'_4$ signals by 2:1 decimation circuit 140. In the event that the background (level 4) input to the Keyer 126B was originally 4:2:2 material, it is desirable to perform the conversion by a direct decimation circuit 140 to reduce the data rate from 4:4:4 to 4:2:2. The lowpass filter 142 is therefore preferably switchable between pass-through and filter modes, and the lowpass filter 142 switching is controlled by the Foreground detect bit described above. Thus when the background is unmodified by a foreground element, the lowpass filter 142 is set into its pass-through mode. The decimated output signals $U_2''$, $V_2''$, from the decimation circuit 140, along with input signal Y4, are provided to CCIR 601 encoder 144. This circuit as shown thus adaptively converts the internal Y,U,V,$\alpha$ signal into a CCIR 4:2:2 signal. In alterative embodiments, the functions performed respectively by the circuits shown in Figures 3B, 3C, and 3D are performed using a similar method but in software rather than by hardware.

## Computer Operating System Software and Concepts

The software component of the invention in the preferred embodiment includes three parts. These are: (1) the operating system, (2) the human interface software, and (3) the specific application software.

The computer hardware portion as described above is controlled by the operating system. The operating system (MS-DOS) is commercially available from Microsoft Corporation and is responsible for those tasks typically handled by an operating system. Briefly, it is responsible for managing: 1) the linking together of the portions of the application program into an executable unit, 2) the execution of the various application programs contained within the executable unit, as required by received operator commands and electronically generated system requirements that arise during the execution of the invention, 3) the input and output of data within between the applications program programs, various elements of the hardware, and the various peripheral devices, and finally 4) the execution of the windows user interface software as described below.

The MS-DOS operating system has been extended in accordance with the invention to permit loading of more application code than can be normally physically held in one megabyte of logically addressable memory at one time. This extension permits the loading of multiple applications modules along with their associated libraries whose aggregate memory requirements exceed the megabyte supported by the standard MS-DOS system capability. This is done by software routines that dynamically switch the 30386 processor between the segmented and "flat" addressing models available in the 30386 processor.

Windows and the User Interface Software

There are three primary elements to the user interface, a computer supported "windows interface," a set of software programs to present various choices associated with keyframe editing to the user of the invention, and a series of pointing devices to generate computer interrupts to the user interface and transmit the operator's choices from those displayed by the applications software. The third element is described above and the first and second elements (which are preferably software) are described below.

The windows interface is commercially available through Microsoft Corporation as "Microsoft Windows." The term "windows" below is a reference to the Microsoft Windows software or to one of the window-like structures that are defined, built, maintained, displayed and updated by the application through the use of the Microsoft Windows software. The invention is not limited to the Microsoft Windows software, and in alternate embodiments uses other kinds of windows or similar structures.

The purpose of the windows is to group applications information and operator choices into logical groupings and display them in an easily understood format on the video WYSE (or compatible) monitor. The attached diagrams display the format of some of the windows themselves as they appear on the WYSE or video monitor screen.

The human interface to windows is manipulated through a number of physical I/O devices as described above. These different devices (serial mouse, track ball, joystick) are used as pointing devices. Each of the devices can be sequentially selected or run in parallel as the primary input device. Once selected their physical position is used to report an updated operator selection to the applications software. In operation, the operator selects a specific pointing device and then manipulates it physically while watching the WYSE or video monitor. The windows software responds to the manipulation of the pointing device by moving a cursor over the window structure displayed on the screen.

When the cursor has reached the desired screen location the operator indicates his desire to input his selection to the software by an additional operator action. The additional action depends on the pointing device. If the serial mouse has been selected the additional action is the depression of a button on the mouse. Once the additional action has been detected by the operating system the specific location of the cursor is reported to the software as a selection, by the operator, of the field displayed under the cursor. The meaning of the option selected depends on the specific application module being controlled as will be outlined below.

Software Flow Control

The following discussion describes the software concepts, flow of control, and sequence of events to implement keyframe editing in accordance with the invention.

Application Software View of the User Interface. The user interface, as described above, is based on windows software. There are preferably three basic types of windows. These windows types (see Figure 4) are: a) "display one keyframe" windows 150 (used to view multiple data parameters within a single keyframe), b) "display many keyframes" windows 152 (used to show a single parameter over multiple keyframes), and c) non-keyframe (i.e., control) windows 154. The first two types of windows build the keyframes upon which the keyframe editing is based. The third type of windows do not build keyframes but rather direct or control the system to take some action based on the definition or the systems state created by previously generated keyframes. Each of these types of windows are discussed below.

The overall flow of software control of the user interface is shown in Figure 4. The "display one keyframe" windows 150 and the "display many keyframes" windows 152, as well as the control windows 154, provide data to the MDL 170. The MDL 170 then controls the Run Time software module 190 (as do some of the control windows 154 directly). The Run Time software 190 provides signals to the Video Processor hardware 120 (as seen in Figure 2).

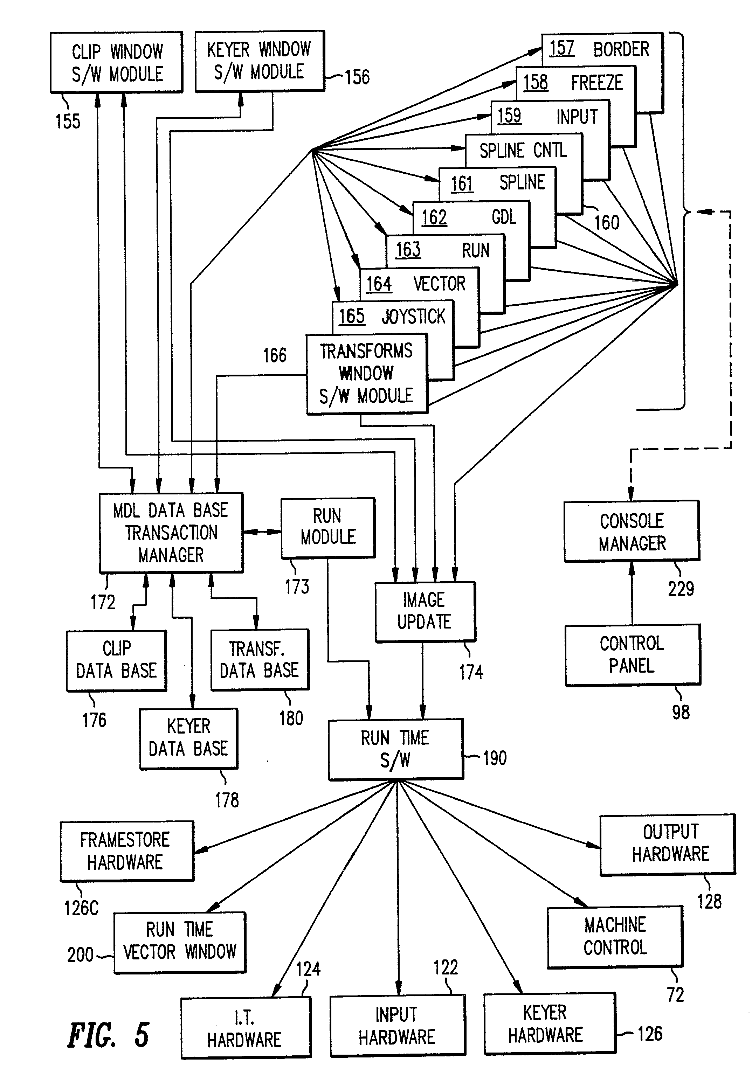

The flow of software control shown in Figure 4 is shown in greater detail in Figure 5. Shown are the various software modules which generate and control the different kinds of windows, including but not limited to the Clip Window module 155, Keyer window module 156, Border window module 157, Freeze window module 158, Input window module 159, Spline control window module 160, Spline window module 161, GDL window module 162, Run window module 163, Vector window module 164, Joystick window module 165, and Transforms window module 166.

All of these windows software modules interact with the MDL Database transactions manager 172 and with the Image Update software module 174

The MDL Database transaction manager 172 in turn manages the three kinds of database - the Clip database 176, the Keyer database 178, and the Transforms database 180. By means of the Run software module 173, the MDL Database transaction manager 172 communicates with the Run Time software module 190. The Run Time software module 190 in turn controls the various aspects of the video hardware as shown and as described above, in addition to the Run Time Vector window 200.

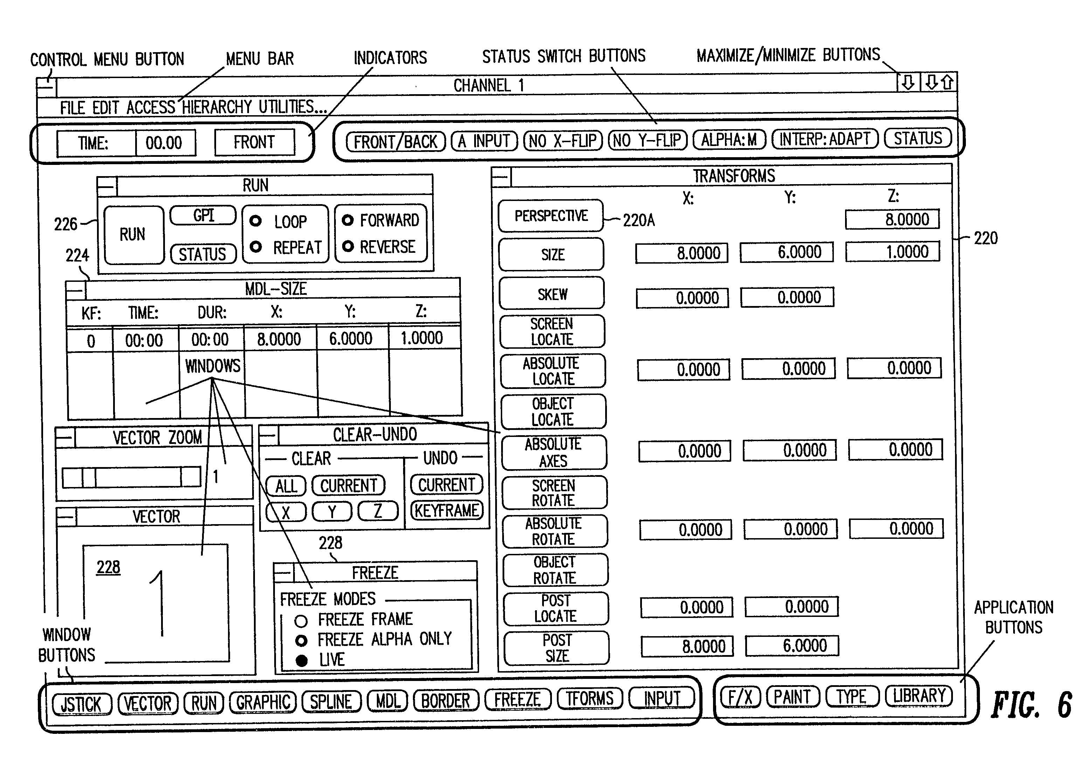

Figure 6 displays the physical screen layouts (the windows interface) of some of the major windows discussed above. The windows Interface is as follows.

Display Many Keyframe Windows. "Display many keyframe" windows 152 (see Figure 4) are used by the operator to create new keyframes of a given type and to directly enter keyframe data in the selected keyframe, or to alternatively select an individual keyframe to be further defined or edited by the "display one keyframe" window 150.

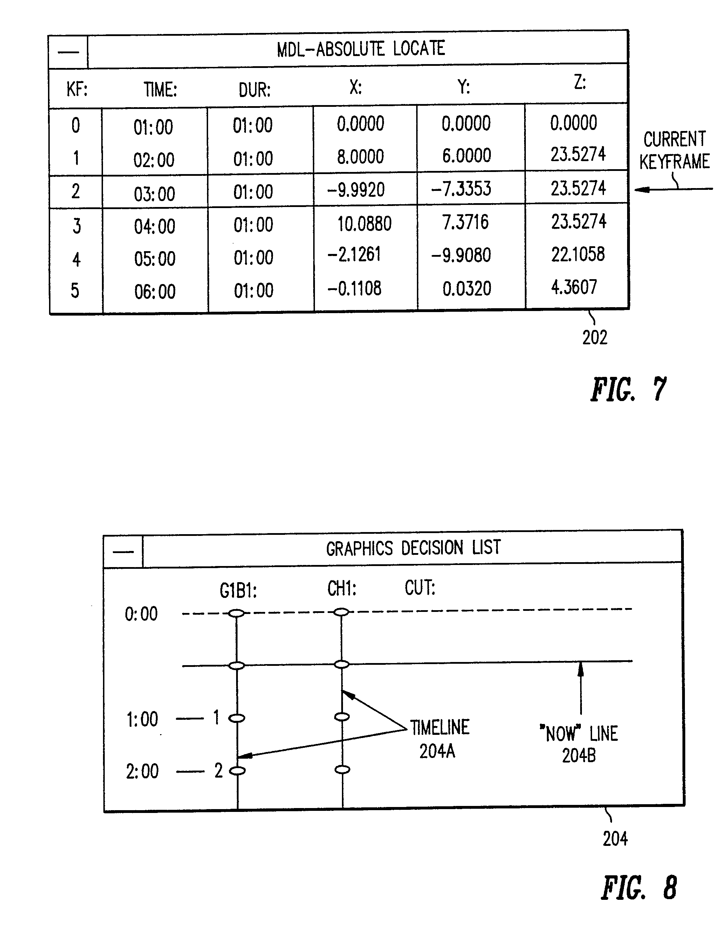

As multiple keyframes are created and modified in this way, the "display many keyframes" window 152 is automatically updated with each new keyframe addition arranged in ascending order by time. Examples of display many keyframes windows include but are not limited to: 1) the master decision list (i.e.. MDL) window 202 (see Figure 7) or 224 (Figure 6) or the individual decision lists such as the Keyer window (not shown), 2) the GDL, (i.e., graphics decision list) window 204 (Figure 8) and, 3) the spline "location" window 222 (Figure 9).

Each of these windows display the interactions between a number of keyframes of the same type. The MDL window 202 (Figure 7) is windowed down to show the decision list as a tabular listing of the keyframes of a given "type" along with their associated parameters for a particular kind of transform. To clarify what is meant by the "type" of keyframe, note the Transforms window 220 in Figure 6. Included as shown fields for perspective size, skew, screen locate, absolute locate, etc. Each of these fields represents a "type" of keyframe and a MDL will be constructed for keyframes of this type. Figure 6 displays the MDL window 224 for the size type of keyframes. Before the MDL is accessed for the first time it is empty. as no keyframes have yet been created. When the MDL is accessed for the first time the system automatically generates an initial keyframe with default values for the parameters.

Additional display formats are possible showing a selected number of parameters or "types" simultaneously over a selected number of keyframes. or simultaneously showing multiple "show one" and "show many" windows, GDL's, and splines.

The "display many keyframe" windows have the ability to define the "current keyframe" or active keyframes from the list of many keyframes that they may contain. In the case of the MDL window 202 (Figure 7) the current keyframe is denoted by the presence of two horizontal lines, with one line located just above the keyframe parameters defined as "current" and one line located just below the parameter line. The pointing device (i.e., mouse) can be used to move the two horizontal lines up and down in the MDL window to change the keyframe referenced by the current keyframe. When the MDL is entered for the first time the "current keyframe" is set to the keyframe at the top of the MDL. Whenever the operator is working in a "display one keyframe" he is updating parameters associated with the "current keyframe" of like type in the "display many keyframes" window.

Multiple keyframes can also be selected as the "current keyframes." This is accomplished by moving the pointing device (typically a mouse) over the first desired keyframe and depressing the mouse button and moving the mouse over the last desired keyframe before releasing the button. This is useful for moving or duplicating or entering data into whole sections or fields of the MDL with the "cut and paste", "copy'. and edit options supported by the windows interface or to do mathematical operations such as add. subtract. multiply, divide by a constant or transcendental function for instance. Portions of the MDL can be "cut" from the MDL. put in storage in a Clips data base "cut buffer", and passed into other windows.

The Graphics decision list (GDL) window 204 (see Figure 8) displays for various physical or virtual objects or object parameters. such as video channel 1 designated "Ch1" and the cut buffer, a temporary data holding structure designated "Cut", the previously created keyframes spread out vertically along a time line 204A, with the associated database of the objects displayed graphically. The Graphics decision list widow 204 includes an element similar to the "current keyframe" in the MDL. This is referred to as the "now" line 204B and is represented by a dotted line drawn across the list orthogonal to the timeline 204A. This representation is quite useful in the representations of "clips" keyframe data.

The Spline window 222 (Figure 9) shown for the location parameter displays the previously generated keyframes spread out along a timeline 222A with an associated graphical representation of the spline data. The Spline control window 206 (Figure 10) includes slider controls 206A, 206B, 206C respectively, to manage the tension, continuity and bias transition curves (the conventional elements of a spline) for each keyframe.

Display One Keyframe Windows. The second class of windows to be discussed were mentioned above briefly and are referred to as "display one keyframe" windows 150 (see Figure 4). These windows are used by the operator to define the non-time parameters associated with a single keyframe. For instance, after an individual keyframe has been created by a display many window the operator uses the pointing device to select the "display one" window (e.g., the Transforms window 220 in Figure 6). After the "display one" window is selected the keyboard 102 and control panel 98 (see Figure 2) peripherals (joystick, fader bar, etc.) are used to modify the parameters as required. As an example, after selecting the Transforms window 220 (Figure 6) one of the parameter boxes such as Perspective 220A might be selected and then values for the individual parameters entered via keyboard or other input device. The parameters of the keyframe being modified are updated in both the display one and associated display many keyframe windows.

Examples of display one keyframe windows include but are not limited to: 1) the Keyer keyframe windows, 2) the Clip keyframe windows, and 3) the Transforms keyframe windows.

Non-keyframe windows. The third class of windows to be discussed are non-keyframe creation (i.e., control) windows 154 in Figure 4. These control windows typically control the execution aspects of the device. That is to say, after a series of keyframes have been created to control one or more aspect of the edit session, these windows are invoked to control and execute the keyframes and view the result. An example of this class of windows is the Run window 226 shown in Figure 6.

The function of the Run window 226 is to cause the system to execute the defined set of keyframes. The keyframes can be run from the starting time of a selected keyframe to the ending time of a selected keyframe, or in reverse order. The Run window 226 also allows the operator to run the keyframe edit list repeatedly in a loop. The Run window 226 is invoked by the operator by selecting the window with the pointing device and then positioning the pointing device over the desired option(s) in the window which are then selected.

In accordance with the invention, a user definable "soft" control panel is therefore provided by the windows. The user can determine the window layouts on the screen in terms of size, position, and which windows are open. The user can save to disk memory the selected window layouts, and call the selected window layouts up again later.

After the user has defined the required keyframes to manage the edit using the "display many" and "display one" windows as outlined above, the system must extract the keyframe parameters and utilize them to control the video hardware to accomplish the desired result. The following describes this process.

Applications Software

This section describes the flow of control through the application software and is illustrated in Figure 5.

The Display Data Bases and the Master Decision List Data Base. The user interaction with the "display many windows" and "display one windows" software described above results in the generation of a two dimensional array of parameters in the master decision list by the MDL database transaction manager software module 172. One dimension (The Y dimension) of the array is time and the other dimension (The X dimension) of the array is determined by the number of parameters associated with the type of keyframe being constructed. For example, the "display many keyframe" window for the absolute locate transformation parameter has five values for the X. These are: Keyframe #, time, X position, Y position, and Z position. The Y dimension in this example is the number of absolute keyframes that have been defined in the Transforms data base. If there are five keyframes Y will be equal to five.

The Transaction Manager. While this two dimensional array is being built in the master decision list by the MDL database transaction manager 172, parameters associated with the data base are maintained in a display data base local to the application. For example, if the operator is working with the Transforms window software module 166, local parameters (e.g. current frame #, key frame type, software state, etc.) are held in a local data object known as the Transform display data base 180. In like fashion the Keyer window software module 156 maintains a Keyer display data base 178 and the Clip window software module 155 maintains a Clip display data base 176.

The Image update and the Run Time Software. Following the update of the MDL data base by updating a parameter in a display window or by the execution of the run command in Run module 173, the Image update module 174 is called. The Image update module 174 passes an index into the master data base to the Run Time Module 190. The Run Time module 190 looks in the data base to see what data has been changed, extracts the data, identifies the hardware the data acts upon, calculates the spline date value if needed and sends the result to the hardware and displays the data numerically and graphically to the operator on the video monitor.

The Run Time module 190 can be set up to run (i.e., display the output from) any one or any combination of data base parameters. In other words, if keyframes have been defined to control transformations, clips and compositing keyframes simultaneously, the run module can be set to show the operator any or all of these events simultaneously.

The Run Time module 190 supports three phases of activity: 1) schedule, 2) preroll and 3) execute. For a transformation or composite event only the execute phase is required as these are instantaneous activities. A clip event may require the schedule and preroll phases because of the time constraints of the linear access video-tape machines that may be associated with clips.

The vector window 228 (see Figure 6) as shown on the monitor display is a graphical representation of the transformation events. That is to say, when keyframes are sent to the hardware 120 by the Run Time software 190 they may be also sent, as an operator option, to the Run Time Vector window software 200 (see Figure 5) that drives the vector window. The Run Time vector window software 200 takes the transformation parameters from the data base and transforms the icon that represents the field of video being output just as the hardware does. This allows the operator to preview the effect of the keyframed transformation without actually having video hardware. The numeral displayed in the vector window 228 (see Figure 6) shows which virtual object or objects is being viewed and how the database supports virtual (i.e., apparent) as well as real objects.

Virtual objects can be converted to physical objects based on the hardware available, or alternately the final images can be made by making multiple passes through the data base using the physical video hardware available and layering the resulting video onto a read write video storage unit.

The Console Manager. The system includes a Console Manager software module 229 (see Figure 5) which manages all desktop peripherals and routes their data to the active window application. When the operator selects a window and a pointing device or the keyboard or other I.O devices associated with control panel 98, the Console Manager 229 routes data from that device to the window. These connections are through virtual links (shown as a dotted line). For instance a joystick might be linked to a transform window and then later on to a border window by Console Manager 229.

The Data Bases. The above discussion outlines how the software sequence of events is managed from the definition of keyframes by the operator through the storage of the data and finally its extraction for action by the hardware. The following discussion outlines information about the specific data bases and their interaction.

The Transforms Data Base. The Transforms database 180 (see Figure 5), in addition to containing the keyframe number, time, and spline data (tension, continuity and bias), maintains two bezier points (i.e., control points for a class of curves) for each keyframe. The Transform data base 180 also contains information concerned with the borders around the raster and hardware setup information.

The Keyer Data Base. The Keyer data base 178 contains the keyframe number, time, transparency level for each of the four levels of the key, parameters controlling the type of key to be constructed (chroma, luma, fades, etc.).

The Clips Data Base. The Clips data base 176 contains the keyframe number, time, reel name, and in times for each of the connected video-storage machines (a record and seven source machines shown such as 86A, ... , 86H in Figure 2) which can be linear access devices such as VTR's or random access devices such as magnetic or optical disks.

The Clips data base 176 includes the starting and ending time or duration of a source of video imagery and the address from which that imagery can be located and as such intrinsically includes being able to access still images contained in an internal electronic still storage.

Data Base Interaction. Each of the data bases outlined above contain: The specific keyframe parameters, time, and duration associated with one element of the event to be programmed. The invention in one embodiment allows events that have previously not been related to be controlled with a common structure.

For example, discrete events consisting of a transformation event programmed with a set of keyframes, a series of clips combined into a finished tape sequence with a set of keyframes, and a multi-layer keyed image with a variable image intensity controlled with a set of keyframes can all be managed out of one linked MDL data structure.

The time values and values in the individual keyframes determine how these events will interact with one another. If the transformation is to happen within a specific clip the starting time of the transformation keyframe is set equal to the starting time of the keyframe in the clip database where the transformation is to occur. If a tape sequence is to be faded to black starting in the middle of a specific clip and concluding by the end of the clip the starting time of the transition keyframe is set equal to the time of a keyframe in the middle of the clip keyframe where the fade to black is desired and the fade is set equal to one half of the duration of the clip.

These are only examples of the many possibilities for events that are to be linked together in linear and hierarchical relationships. The method is extendable to other types of transitions such as "trails" and the full range of "wipe" transitions as well as other well known events associated with video images.

Events in one data base ban be interlocked to events in another data base, so when an operator selected controlling event (a master event) is edited, the controlled (slave) event is appropriately modified. Also, the data base is inherently hierarchical and object oriented and presented to the operator as an object-oriented paradigm for editing. Objects can be grouped together and ungrouped also for manipulations. In addition, user provided symbolic names can be assigned to objects (or groups of objects) to create virtual data objects. Objects need not be entirely contained within the physical system or even necessarily directly controllable by the physical system described.

Typical Software Sequence of Events

Transform keyframe edit. The following is an example of a detailed software sequence of events to implement a typical keyframe edit of a transform event. Following each event is a brief explanation of the processing associated with the event, relative to Figure 5 and the software flow of control discussion above. • Select mouse input device -
The mouse is selected as a pointing device by the Console Manager 229.
• Open transform window -
The Transforms window software 166 is passed control by Window software. The Transforms window is painted on the screen by the Window Manager (not shown), and future mouse interrupts are directed to transform window software by the Console Manager 229.
• Select "screen locate" with mouse -
The Transforms window software 166 receives mouse coordinates of screen locate field, highlights Screen Locate field. The Transforms window software 166 initiates the MDL to paint the Screen Locate keyframes on screen, and the default keyframe created at initialization time is displayed.
• Use joystick to move Y position of object (position object lower in screen) -
The Console Manager 229 routes the joystick input to transform window, the screen locate parameter is updated in the Y field of screen locate field of the transformation window, the parameter is updated by the data base by the Transaction manager 172 to the Transform data base 180. If the MDL window is open to the location Transforms, the appropriate field is updated in that window. Next the MDL data base parameter index is passed to the Run time module 190 via the Image update module 174, the Run time module 190 identifies interpolator hardware event from MDL index, and the video image is repainted in the new Y position on the video monitor by the video hardware.
• Use control panel to key in 5:00 (i.e., five seconds) and hit enter on control panel -
The parameter 5:00 is passed to the object locate parameter of the transform data base window software, and the duration field is updated (the absolute duration is calculated at run time based on either an internal or external clock).

Keyer keyframe edit. The following is the detailed software sequence of events to implement a typical keyframe edit of a keyer event. Following each event is the name of the software module responsible for completing the event.
• Select fader bar (i.e. slider) as input device -
The Fader bar selected as pointing device by the Console Manager 229.
• Open keyer window -
The Keyer window software 156 is passed control by the Windows software. The Keyer window is drawn on the screen by the Window Manager, and future fader bar interrupts are directed to the Keyer window software 156 by the Console Manager 229.
• Select "layer 1" with console -
The Keyer window software 156 receives layer number 1 selection, and highlights Selected layer field. The Keyer window software 156 initiates the MDL to paint keyer keyframes on screen, and the default keyframe created at initialization time is displayed.
• Use fader bar to decrease or increase transparency of level 1 video layer -
The Console Manager 229 routes the fader bar input to the Keyer window software 156, the transparency field of the Keyer window for a selected layer is selected, and the parameter updated in the data base by the Transaction Manager 172. The MDL data base parameter index is passed to the Run time module 190 via the Image update module 174, and the Run time module 190 identifies frame store keyer hardware event from the MDL index, and the video image is displayed for the specified source obeying transparency and keying parameters.

Clip keyframe edit. The following is the detailed software sequence of events to implement a typical edit of a clip event.
• In the sources window:
Select the source video machine - A, B, C, D - with the keyboard or on the window display by the pointing device.
• Use the joystick to shuttle videotape to locate the first frame of the clip.

• Select Mark In on the keyboard -

A keyframe is created at the current system effect time. The timecode for the In timecode is saved in the data base as a parameter of this keyframe. The MDL Window is updated with the In timecode.

• Use the joystick to locate the last frame of the clip -

• Select Mark Out on the keyboard -

A keyframe is created at an effect time equal to the duration of the clip (Out timecode - In timecode). The keyframe is flagged as an Out type in the database. The MDL Window is updated with markers that represent the clip.

• Select the Recorder on the keyboard or window -

• Use joystick to locate the first frame of the clip -

• Select Mark in on the keyboard -

A keyframe is created at the current system effect time. The timecode for the In timecode is saved in the data base as a parameter of this keyframe. The MDL window is updated with the In timecode.

• Optionally Use the joystick to locate the last frame of the clip -

• Select Mark Out on the keyboard -

A keyframe is created at an effect time equal to the duration of the clip (Out timecode - In timecode). The keyframe is flagged as an Out type in the database. The MDL Window is updated with markers that represent the clip. The Record mark out may not be required if the selected video-tape machines cannot support variable speed play.

• Select Run in the Run Window. (Same as above with the addition of Sched. Prep. and Exe cycle.)

Once the basic master decision list supported by linked data bases has been implemented, the types of events that can be contained are essentially unlimited. To extend the method presented here in accordance with the invention, additional user interface modules are added to provide additional preferably two dimension data structures of the type described above. At some point a faster 30386 PC with additional memory may be required to handle the larger data bases in real-time. The additional data structures differ from the first structure in their specific parameter content and the detailed requirements of the hardware they are to control. The software module structures described above for display one windows, display many windows, keyframe data bases, Image update, Run time module, and Console Manager are general structures and can be implemented in other forms consistent with the invention.

Although a preferred embodiment of the invention has been shown and described herein, variation and modification may be made without departing from the scope of the invention.

## Claims

1. A method of processing an electronic image comprising the steps of:
forming at least one hierarchical database having information relating to the electronic image; and processing the electronic image by accessing the information in the database.

2. A method as claimed in claim 1 wherein the information includes a particular time and parameters relating to an event at the particular time.

3. A method as claimed in claim 1 or 2 comprising forming a plurality of hierarchical databases having information relating to the electronic image.

4. A method as claimed in claim 3 wherein at least one of the databases is a virtual database having information which does not correspond to a physical reality.

5. A method as claimed in claim 3 or 4 comprising the steps of forming a non-video database including information not relating to a video image, and combining the information in the non-video database with information in one of the databases having information relating to the electronic image.

6. A method as claimed in claim 3 or 4 comprising the step of combining information from at least two of the databases.

7. A method as claimed in claim 3, 4 or 6 comprising the step of interlocking information from a second one of the databases.

8. A method as claimed in claim 1 comprising the step of providing a two-dimensional visual representation of the database.

9. A method as claimed in claim 8 comprising the steps of extracting a portion of the two-dimensional visual representation, and inserting selectively the extracted portion into a particular location in the two-dimensional visual representation.

10. A method as claimed in claim 8 or 9 comprising the step of providing the visual representation in a window display format.

11. A method as claimed in claim 10 comprising the steps of providing a plurality of user interface devices for controlling the window display format, and providing a link between one of the user interface devices and a particular window display format.

12. A method as claimed in claim 10 or 11 comprising the steps of configuring a plurality of window display formats; saving the configured window display formats; and recalling the saved configured window display formats.

13. A method as claimed in claim 8 or 9 comprising the step of displaying simultaneously a plurality of different visual representations of the database.

14. A method as claimed in claim 8 or 9 comprising the steps of providing at least a second two-dimensional visual representation of the data base, and linking the second visual representation to the first-mentioned visual representation.

15. A method as claimed in any preceding claim comprising the step of providing a database manager for controlling the database.

16. A method as claimed in claim 15 comprising the steps of providing a storage area, and extracting and copying a selected portion of the database to the storage area by the data base manager.

17. A method as claimed in any preceding claim comprising the step of performing mathematical operations on a selected portion of the database.

18. A method as claimed in any preceding claim wherein the database is an object-oriented database.

19. A method as claimed in claim 18 comprising the step of providing a name for a selected portion of the database.

20. A method as claimed in any preceding claim wherein the database includes at least three levels of hierarchy.

21. A method as claimed in any preceding claim comprising the step of accessing the information in the hierarchical database with reference to a time line.

22. A method as claimed in any preceding claim comprising the step of accessing the information in the database a second time so as to combine an additional electronic image with a first electronic image.

23. A method as claimed in any preceding claim wherein the hierarchical database includes substantially all information relating to editing of a video project.

24. A method as claimed in claim 23 comprising the step of using the hierarchical database as an initial database modifiable to form a second database.

25. A method as claimed in claimed in any preceding claim wherein the hierarchical database further includes additional information.

26. A method of processing an electronic image comprising the steps of:
expressing the electronic image as information including particular time and parameters describing an event at the particular time; and
forming a plurality of differential equations having the parameters as coefficients;
wherein the differential equations control the processing of the electronic image.

27. A method of scaling a video signal having several components, comprising the steps of:
providing at least one component of the video signal;
providing a look-up table including data for performing an operation; and
operating on the one component in accordance with the data included in the look-up table.

28. A method of converting a selected portion of a raster from a first format to a second format, comprising the steps of:
dividing a signal representing the selected portion of the raster into at least two parts; and
encoding each of the two parts of the signal into the second format substantially equivalent to a CCIR 601 standard.

29. A method of converting a particular portion of a raster from a first format to a second format, comprising the steps of:
selecting a filtering method depending on a characteristic of the particular portion of the raster;
filtering a portion of a signal representing the particular portion of the raster by the selected filtering method; and
encoding at least a part of the portion of the signal into the second format.

30. A method as claimed in claim 29 comprising the step of selecting the portion of the signal as a function of whether the signal represents a foreground element of the raster.

31. A method of combining visual elements comprising the steps of:
providing a plurality of visual elements, each element having a particular amount of transparency;
providing control signals; and
combining at least four layers, each layer including at least one of the visual elements, in response to the control signals.

32. A system for processing electronic images comprising:
means for providing a visual display of at least one hierarchical data base having information relating to an electronic image;
means for altering the database; and
means for altering the visual display in accordance with the alterations made in the database.

33. A system as claimed in claim 32 wherein the information relating to an electronic image includes a particular time and parameters relating to an event at the particular time.

**FIG. 1**

(PRIOR ART)

*FIG. 2*

*FIG. 3A*

EP 0 395 449 A2

## FIG. 3B

Y ———/8——————————— 64K X 8 ———/8——→ Y´
                        130A

——/8——

U ———/8——————————— 64K X 8 ———/8——→ U´
——/8——                  130B

V ———/8——————————— 64K X 8 ———/8——→ V´
——/8——                  130C

2:1 SELECT —134

∝ ———/8——

FADER ———/8——

## FIG. 3C

( Y,U,V,∝ )₄₄₄₄

Y

1/2 U          CCIR 601 ENCODER ———→ CCIR 601 OUTPUT 4:2:2 CHANNEL
1/2 V                  138A
136A

1/2 U          CCIR 601 ENCODER ———→ CCIR 601 OUTPUT 4:2:2 CHANNEL
1/2 V                  138B
136B    ∝

**FIG. 3D**

**FIG. 4**

CLIP WINDOW
S/W MODULE

155

KEYER WINDOW
S/W MODULE

156

157 BORDER

158 FREEZE

159 INPUT

SPLINE CNTL

161 SPLINE

160

162 GDL

163 RUN

164 VECTOR

165 JOYSTICK

166

TRANSFORMS
WINDOW
S/W MODULE

MDL DATA BASE
TRANSACTION
MANAGER

172

RUN
MODULE

173

IMAGE
UPDATE

174

CONSOLE
MANAGER

229

CONTROL
PANEL

98

CLIP
DATA BASE

176

TRANSF.
DATA BASE

180

KEYER
DATA BASE

178

RUN TIME
S/W

190

FRAMESTORE
HARDWARE

126C

OUTPUT
HARDWARE

128

RUN TIME
VECTOR WINDOW

200

MACHINE
CONTROL

72

I.T.
HARDWARE

124

INPUT
HARDWARE

122

KEYER
HARDWARE

126

**FIG. 5**

CONTROL MENU BUTTON  MENU BAR  INDICATORS  STATUS SWITCH BUTTONS  MAXIMIZE/MINIMIZE BUTTONS

CHANNEL 1

FILE EDIT ACCESS HIERARCHY UTILITIES...

TIME: 00.00  FRONT

(FRONT/BACK) (A INPUT) (NO X-FLIP) (NO Y-FLIP) (ALPHA:M) (INTERP:ADAPT) (STATUS)

**RUN**

226
224

RUN  GPI  STATUS  ○ LOOP  ○ REPEAT  ○ FORWARD  ○ REVERSE

**MDL-SIZE**

| KF: | TIME: | DUR: | X: | Y: | Z: |
|-----|-------|------|--------|--------|--------|
| 0 | 00:00 | 00:00 | 8.0000 | 6.0000 | 1.0000 |
| | | WINDOWS | | | |

**VECTOR ZOOM**

1

**CLEAR-UNDO**

— CLEAR —        — UNDO —
(ALL) (CURRENT)    (CURRENT)
(X) (Y) (Z)        (KEYFRAME)

228

**VECTOR**

228
1

**FREEZE**

228

— FREEZE MODES —
○ FREEZE FRAME
○ FREEZE ALPHA ONLY
● LIVE

WINDOW
BUTTONS

**TRANSFORMS**

|  | X: | Y: | Z: |
|---|--------|--------|--------|
| PERSPECTIVE —220A | | | 8.0000 |
| SIZE | 8.0000 | 6.0000 | 1.0000 |
| SKEW | 0.0000 | 0.0000 | |
| SCREEN LOCATE | | | |
| ABSOLUTE LOCATE | 0.0000 | 0.0000 | 0.0000 |
| OBJECT LOCATE | | | |
| ABSOLUTE AXES | 0.0000 | 0.0000 | 0.0000 |
| SCREEN ROTATE | | | |
| ABSOLUTE ROTATE | 0.0000 | 0.0000 | 0.0000 |
| OBJECT ROTATE | | | |
| POST LOCATE | 0.0000 | 0.0000 | |
| POST SIZE | 8.0000 | 6.0000 | |

220

APPLICATION BUTTONS

(JSTICK) (VECTOR) (RUN) (GRAPHIC) (SPLINE) (MDL) (BORDER) (FREEZE) (TFORMS) (INPUT)    (F/X) (PAINT) (TYPE) (LIBRARY)

*FIG. 6*

| — | MDL—ABSOLUTE LOCATE | | | | |
|---|---|---|---|---|---|
| KF: | TIME: | DUR: | X: | Y: | Z: |
| 0 | 01:00 | 01:00 | 0.0000 | 0.0000 | 0.0000 |
| 1 | 02:00 | 01:00 | 8.0000 | 6.0000 | 23.5274 |
| 2 | 03:00 | 01:00 | −9.9920 | −7.3353 | 23.5274 |
| 3 | 04:00 | 01:00 | 10.0880 | 7.3716 | 23.5274 |
| 4 | 05:00 | 01:00 | −2.1261 | −9.9080 | 22.1058 |
| 5 | 06:00 | 01:00 | −0.1108 | 0.0320 | 4.3607 |

CURRENT KEYFRAME

202

*FIG. 7*

GRAPHICS DECISION LIST

G1B1:          CH1:          CUT:

0:00

1:00 — 1

2:00 — 2

TIMELINE 204A

"NOW" LINE 204B

204

*FIG. 8*

FIG. 9

FIG. 10